# FASCICULE DE BREVET EUROPEEN

(11) **EP 0 691 718 B1**
(45) Date de publication et mention de la délivrance du brevet: **06.05.1999**
(21) Numéro de dépôt: 95410064.0
(22) Date de dépôt: 27.06.1995
(51) Int. Cl.: H02B 1/32, H02B 1/42

(54) **Châssis d'appareillage, notamment pour un coffret électrique**
Gerätechassis, insbesondere für ein elektrisches Gehäuse
Apparatus chassis, especially for an electrical box

(30) Priorité: 05.07.1994 FR 9408376
(43) Date de publication de la demande: 10.01.1996
(73) Titulaire: SCHNEIDER ELECTRIC SA, 92100 Boulogne Billancourt (FR)
(72) Inventeur: Buet, Jacques, F-38050 Grenoble Cedex 09 (FR); Meignoz, Josiane, F-38050 Grenoble Cedex 09 (FR); Pellicano, Joseph, F-38050 Grenoble Cedex 09 (FR)
(74) Mandataire: Hecké, Gérard

(56) Documents cités:
- WO-A-92/14289
- DE-A- 1 590 131
- FR-A- 1 205 750
- FR-A- 2 679 728

## Description

La présente invention concerne un châssis de support d'un appareillage électrique destiné à être fixé dans un coffret électrique encastré ou en saillie.

Pour réaliser l'installation d'un grand nombre d'appareillages électriques, on utilise un ou plusieurs châssis sur lesquels sont fixés un certain nombre d'appareils électriques, et l'on fixe lesdits châssis dans un coffret encastré ou en saillie sur un mur. De tels châssis sont en général constitués principalement chacun par deux montants reliés au niveau de leur partie inférieure par un rail de fixation de l'appareillage, les deux montants étant logés respectivement dans deux évidements de forme correspondante ménagés dans deux parois opposées du coffret. Le châssis est solidarisé au coffret par fixation du rail sur la paroi de fond du coffret et/ou la fixation des montants sur les parois latérales correspondantes. Or, l'alimentation électrique de ces appareils est réalisée de façon connue par l'intermédiaire de câbles électriques rassemblés dans une goulotte installée à proximité du châssis de façon que les câbles soient introduits par l'un des côtés du coffret et branchés sur des bornes correspondantes de l'appareillage électrique. Il en résulte qu'il est nécessaire de prévoir dans le coffret une zone dite de travail plus importante, du côté de l'introduction des câbles, entre l'extrémité du coffret et le rail de fixation, de manière à faciliter l'arrivée des tubes et le logement de borniers, échelles à câbles etc.... Cette nécessaire dissymétrie du coffret engendre un sens de montage de ce coffret qui implique une contrainte à laquelle est soumis l'utilisateur lors de la mise en place du coffret dans le mur. Ce type d'ensemble coffret/châssis présente d'autres inconvénients qui tiennent en ce que la fixation du châssis manque de précision et en ce qu'elle gêne la circulation de filerie lorsqu'elle est réalisée au niveau du rail.

On connaît également le brevet DE-A-1 590 131 décrivant un coffret logeant un châssis, ledit châssis comprenant deux montants reliés par un rail, les deux montants étant fixés respectivement sur les bords de deux parois latérales opposées du coffret au moyen d'une vis coopérant avec un orifice oblong prévu dans le montant.
Or, ce châssis ne permet pas de libérer un espace important entre l'une des parois latérales et le rail, du côté de l'introduction des câbles, de manière à faciliter l'arrivée des tubes, le logement de borniers etc ...

La présente invention résout ces problèmes et propose un châssis, notamment pour un coffret électrique, de conception simple et présentant une facilité et une précision de montage particulièrement accrues.

A cet effet la présente invention a pour objet un châssis d'appareillage destiné à être fixé dans un coffret électrique ou analogue, du genre comprenant deux montants reliés à leur partie inférieure, par un rail de fixation de l'appareillage électrique s'étendant sensiblement perpendiculairement auxdits montants, les deux montants étant fixés respectivement sur deux parois latérales opposées du coffret en étant logés respectivement dans deux évidements en vis à vis ménagés dans lesdites parois, ce châssis étant caractérisé en ce que les évidements précités présentent une largeur supérieure à celle des montants correspondants de manière à permettre le déplacement du châssis le long des parois latérales précitées entre deux positions extrêmes, lesdits évidements comportant des moyens de fixation coopérant avec des moyens de réglage prévus dans la partie supérieure des montants pour assurer la fixation du châssis entre les deux positions extrêmes précitées définies par les parois latérales des évidements de manière à libérer un espace d'un côté ou de l'autre du coffret, entre le rail et une paroi latérale du coffret parallèle au rail, en fonction du côté d'arrivée des câbles.

Selon une réalisation particulière de l'invention, les moyens de réglage précités comportent au moins une lumière de forme allongée ménagée dans la partie supérieure de chaque montant coopérant avec une vis ou analogue destinée à être vissée dans un orifice prévu dans la paroi latérale correspondante du coffret.

Selon une caractéristique particulière, l'orifice précité est réalisé dans un élément de forme sensiblement cylindrique s'étendant en saillie sur la paroi de fond de l'évidement correspondant.

Selon une autre caractéristique, les parois latérales de chaque évidement épousent la forme extérieure des parois latérales du montant correspondant.

Avantageusement, la lumière précitée comprend une partie circulaire centrale à partir de laquelle s'étendent deux portions de lumières droites dont la largeur est inférieure au diamètre de la partie centrale et est légèrement supérieure au diamètre de la tige de vis précitée, le diamètre de ladite partie centrale étant légèrement supérieur au diamètre de la tête de vis.

Selon une variante de réalisation, le châssis comporte au moins deux châssis élémentaires comportant les caractéristiques précédentes prises seules ou en combinaison, lesdits châssis étant reliés par deux plaques de liaison fixées sur la partie supérieure des montants situés d'un même côté des rails, lesdites plaques comportant des lumières allongées en regard de lumières allongées prévues respectivement dans les parties supérieures des montants.

Selon une autre caractéristique, chaque plaque de liaison comprend deux lumières telles que précédemment décrites, lesdites portions droites se terminant par des portions inclinées parallèles entre elles.

Selon une autre caractéristique, les parties externes des lumières précitées sont dirigées vers l'intérieur du coffret tandis que les parties internes sont dirigées vers l'extérieur dudit coffret.

Selon une autre caractéristique, chaque montant comporte une partie inférieure de fixation du rail, une partie intermédiaire évasée et une partie supérieure comportant les moyens de réglage précités et s'étendant sensiblement perpendiculairement à la partie intermédiaire précitée.

Selon une autre caractéristique, la partie inférieure de chaque montant comporte au moins une glissière dans laquelle l'extrémité correspondante du rail est montée coulissante et fixée par des moyens de fixation appropriés.

Selon une autre caractéristique, le coffret est fermé par un plastron et les moyens de fixation précités sont situés à l'avant du coffret et de part et d'autre du plastron.

Mais d'autres avantages de l'invention apparaîtront mieux dans la description détaillée qui suit et se réfère aux dessins annexés donnés uniquement à titre d'exemple et dans lesquels :

La figure 1 est une vue en perspective d'un châssis d'appareillage conforme à l'invention constitué de deux châssis élémentaires.

La figure 2 est une vue en perspective illustrant la partie intérieure d'un coffret électrique dans lequel est monté un châssis constitué de deux châssis élémentaires.

La figure 3 est une vue similaire à la précédente, mais illustrant le coffret sans le châssis.

La figure 4 est une vue de dessus du coffret avec le châssis.

La figure 5 est une vue en perspective illustrant plus particulièrement la partie arrière d'un châssis formé de deux châssis élémentaires.

La figure 6 illustre en perspective l'un des montants du châssis de l'invention.

La figure 7 est une vue de dessus d'un montant utilisé pour la réalisation d'un châssis constitué d'un seul châssis élémentaire.

Les figures 8, 9 et 10 illustrent une plaque destinée à relier respectivement deux, trois et quatre châssis élémentaires ,

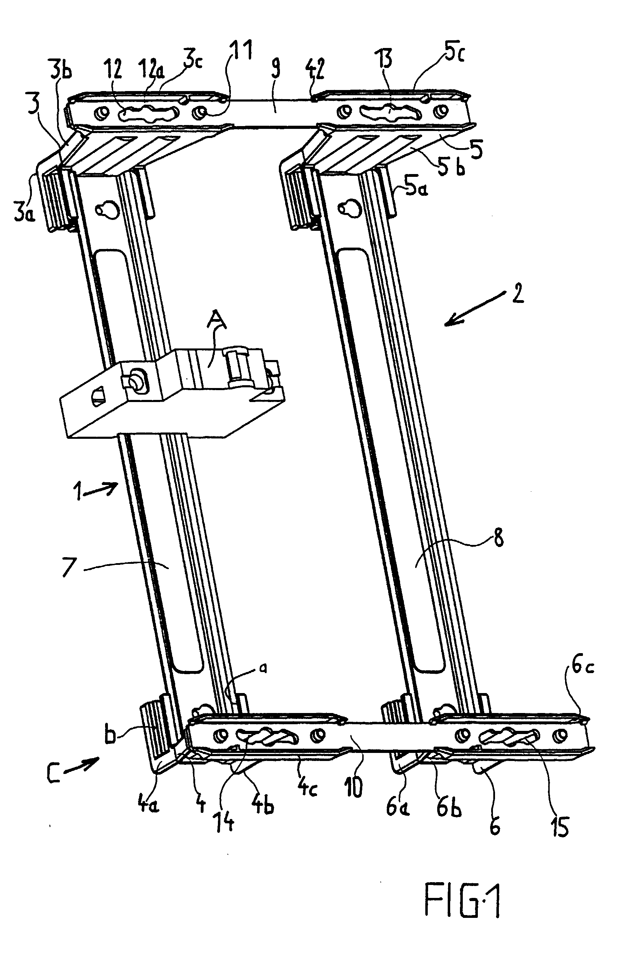

Sur les figures 1, 5 et 6, on voit un châssis C conforme à l'invention comprenant deux châssis élémentaires 1, 2. Chaque châssis élémentaire 1, 2 est constitué par deux montants 3, 4 et 5, 6 reliés par un rail de fixation 7, 8 supportant des appareils électriques A tels des disjoncteurs dont un seul est représenté sur ces figures. Chacun des montants 3 à 6 comprend une partie inférieure de fixation du rail 3a à 6a comportant deux glissières respectivement supérieure et inférieure a, b, une partie intermédiaire évasée 3b à 6b s'étendant sensiblement perpendiculairement à la direction des glissières a, b et une partie supérieure 3c à 6c, sensiblement perpendiculaire au plan de la partie intermédiaire précitée, et par laquelle le châssis C est destiné à être fixé dans un coffret électrique E de la manière qui sera expliquée ultérieurement. Selon cette réalisation de l'invention, les deux châssis élémentaires 1, 2 sont assemblés de façon que leurs rails de fixation respectifs 7,8 soient parallèles l'un par rapport à l'autre et que les montants 3, 5 et 4, 6 situés d'un même côté des rails 6, 7 se trouvent l'un en face de l'autre. Ces deux montants 3, 5 et 4, 6, de préférence en plastique, sont reliés par une plaque 9, 10, fixée à ses deux extrémités opposées, par l'intermédiaire d'éléments de fixation appropriés 11 et 42, sur les parties supérieures 3c, 5c et 4c, 6c des deux montants.

En se reportant plus particulièrement aux figures 1, 5, 6 et 8, on voit que les plaques de liaison 9, 10, de préférence réalisées en métal, comportent chacune deux lumières 12, 13, 14, 15 dont la forme sera décrite ultérieurement. Ces lumières 12 à 15 sont superposées lors de la fixation de la plaque 9, 10, avec des lumières 16 de forme sensiblement rectangulaire prévues respectivement dans les parties supérieures respectives des deux montants 3, 5 et 4, 6.

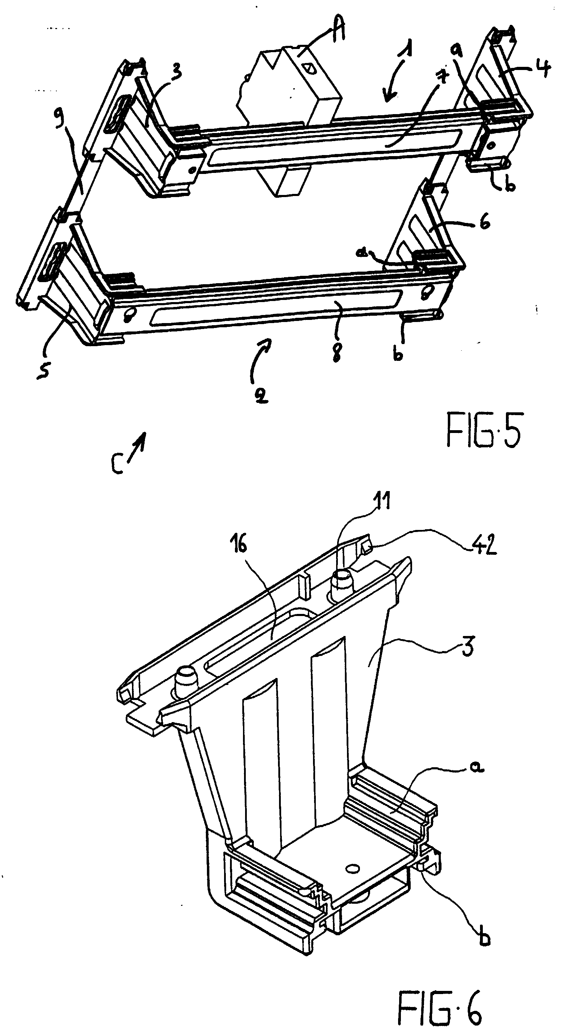

Sur la figure 1 en particulier, on voit que les deux rails de fixations 7, 8 sont introduits et fixés dans les glissières supérieures a des montants 3 à 6, alors que dans le cas du châssis illustré sur la figure 5, l'un 7 des rails 7, 8 est fixé dans les glissières supérieures a des montants 3, 4, tandis que l'autre 8 est fixé dans les glissières inférieures b des deux autres montants 5, 6. Ceci dépend de l'espace que l'on souhaite réserver entre la paroi inférieure des rails 7,8 (ou des appareils) et le fond du coffret en fonction du côté d'arrivée des câbles électriques.

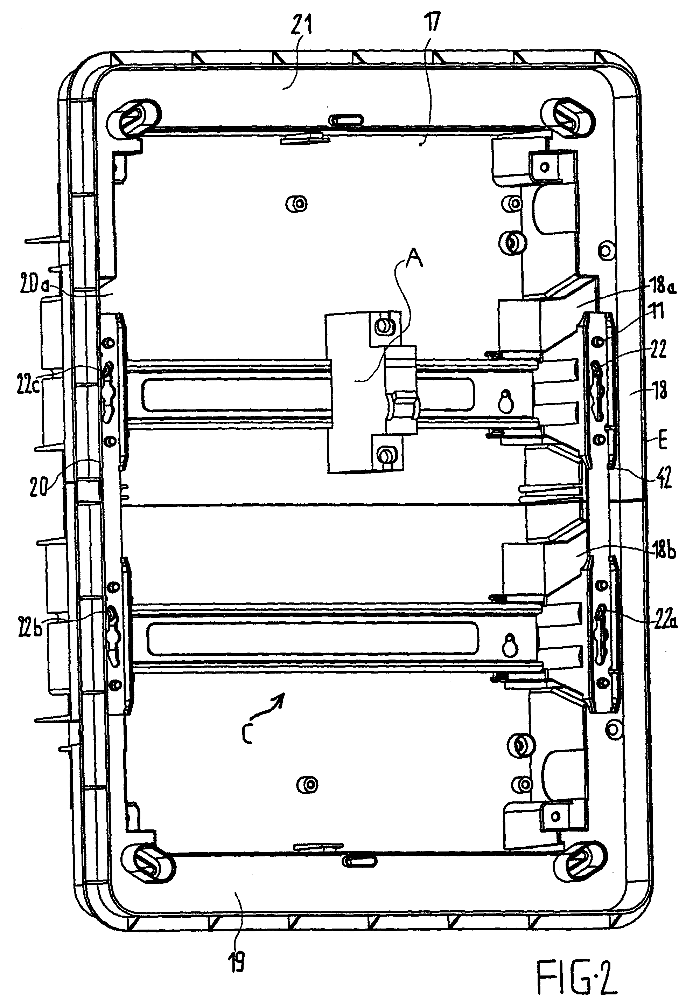

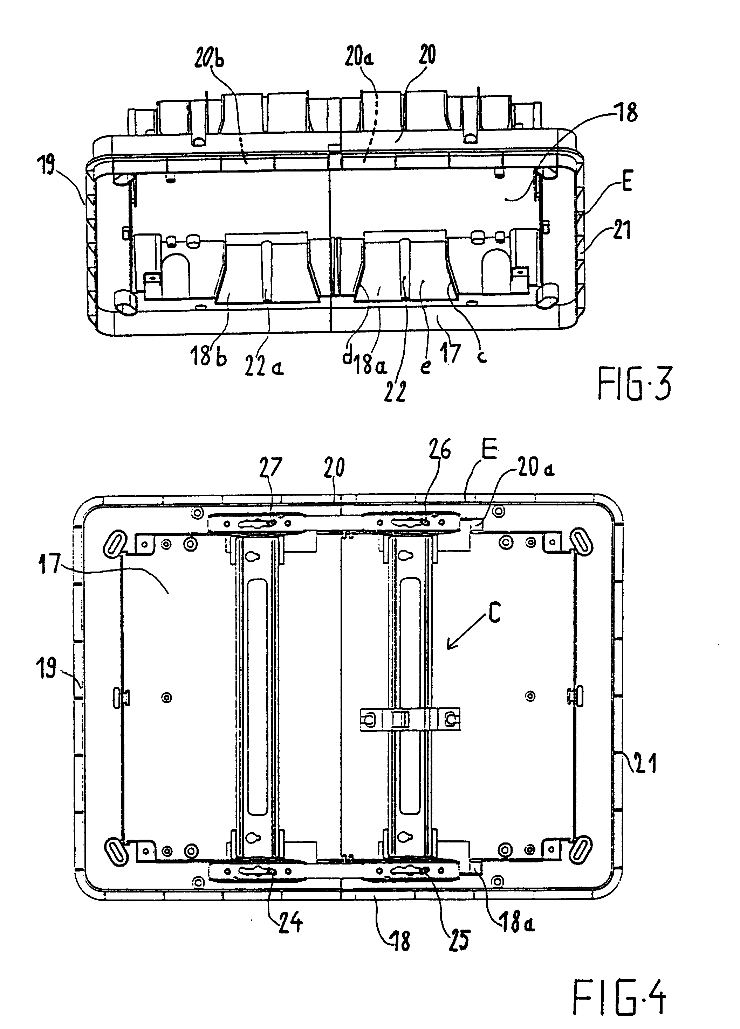

En se reportant maintenant aux figures 2, 3 et 4, on voit un coffret électrique E dans lequel le châssis C tel que décrit précédemment est destiné à être fixé. Ce coffret E comprend une paroi de fond 17 et quatre parois latérales 18 à 21 délimitant un espace sensiblement parallèlépipèdique. Les deux parois latérales opposées de plus grandes longueurs 18, 20 de ce coffret E comporte chacune deux évidements 18a, 18b et 20a, 20b, les deux évidements 18a, 18b prévus dans l'une 18 des parois 18, 20 se trouvant en regard des deux évidements 20a, 20b, ménagés dans l'autre paroi 20 du coffret E. Chacun de ces évidements 18a, 18b, 20a, 20b, est délimité par des parois c, d dont la forme correspond à celle des parois latérales des montants 3 à 6, mais présente une largeur supérieure à celle des montants. Chaque évidement comporte également, en saillie sur sa paroi de fond e, un élément tubulaire 22, 22a, 22b, 22c s'étendant parallèlement à ladite paroi e et comportant un évidement destiné par exemple à recevoir une vis plastique autotaraudeuse. Deux évidements en vis à vis 18a, 20a ou 18b, 20b du coffret E sont destinés à loger respectivement deux montants 3, 4 ou 5, 6 d'un châssis élémentaire 1, 2 tel que décrit précédemment.

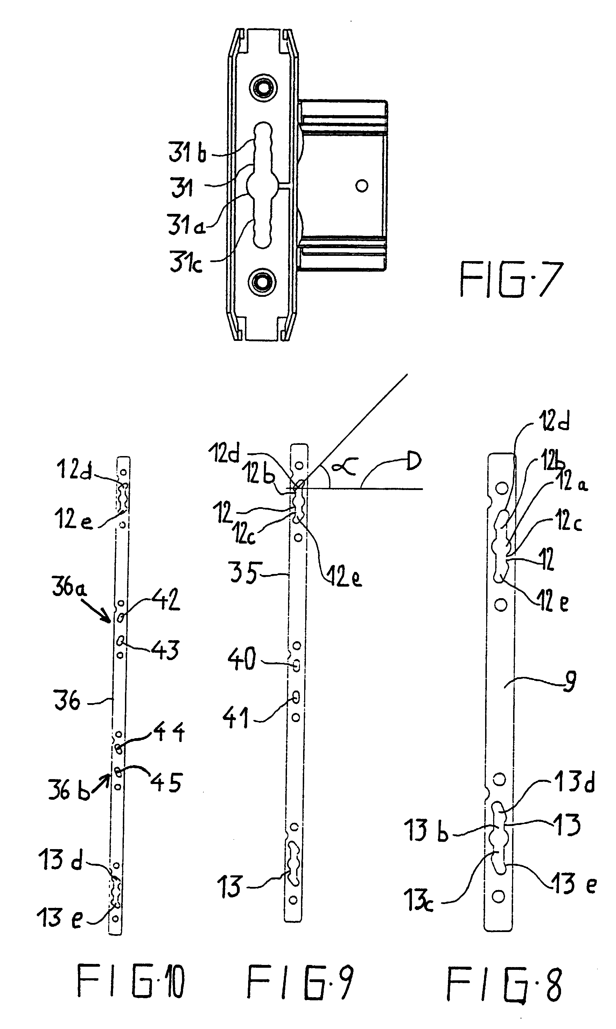

Suivant cette réalisation particulière de l'invention, les lumières 12 à 15 réalisées dans les plaques de liaison 9, 10, telles que représentées en figure 8, comprennent une partie circulaire centrale 12a, à partir de laquelle s'étendent deux portions de lumières droites 12b, 12c parallèles à la direction longitudinale du coffret et d'une largeur inférieure au diamètre de la partie centrale précitée, lesdites portions droites 12b, 12c se terminant par des portions inclinées 12d, 12e orientées suivant des sens opposés et dont la largeur correspond à celle des portions droites 12b, 12c. Ces lumières 12 à 15 permettent la fixation des châssis élémentaires 1, 2 en différentes positions le long des parois latérales 18, 20 du coffret E entre deux positions extrêmes définies par les parois c, d de l'évidement correspondant 18a, 18b, 20a, 20b, par l'intermédiaire de vis 24 à 27 traversant les deux lumières en vis à vis 12 à 15 et 16 prévues respectivement dans la plaque et le montant, et vissées dans l'élément tubulaire précité 22 à 22c.

On décrira ci-après brièvement le montage d'un châssis C constitué de deux châssis élémentaires 1, 2 conforme à l'invention dans un coffret électrique E en référence aux figures 2 à 4.

Après la mise en place du coffret E dans le mur, on réalise la fixation des rails 7, 8 dans les parties inférieures 3a à 6a des montants 3 à 6, puis la fixation des plaques de liaison 9, 10 sur les montants correspondants de manière à former un châssis C constitué de deux châssis élémentaires 1, 2. Puis les châssis 1, 2 sont mis en place dans le coffret E en introduisant les quatre montants 3 à 6 dans les évidements correspondants 18a, 18b, 20a, 20b et quatre vis 24 à 27, après introduction dans les lumières précitées, sont vissées respectivement dans les quatre éléments tubulaires 22 à 22c prévus dans lesdits évidements sans qu'il soit nécessaire de supporter le poids du châssis C et de l'appareillage qui tiennent tout seuls dans le coffret étant en appui sur les parois inférieures des évidements.

On notera que l'on pourra également monter et fixer le châssis après avoir mis en place les vis, car le diamètre des portions centrales 12a des lumières est supérieur au diamètre des têtes de vis.

Puis on règle la position du châssis C le long des parois latérales 18, 20 du coffret E, en fonction du côté d'arrivée des câbles, en déplaçant les montants 3 à 6 à l'intérieur des évidements 18a, 18b, 20a, 20b, ce qui engendre le déplacement des vis 24 à 27 dans les parties droites 12b ou 12c puis inclinées 12d ou 12e des lumières 12 à 15 dans lesquelles elles sont retenues, et l'on effectue un précentrage du châssis grâce à la présence de ces portions de lumière inclinées. Il suffit alors, lorsque la position du châssis C est déterminée de terminer le serrage des vis pour réaliser la fixation définitive du châssis.

On voit donc que le coffret, préalablement au montage du châssis, est parfaitement symétrique, de sorte qu'il ne présente pas de sens de montage et qu'en conséquence aucune contrainte n'est imposée à l'opérateur qui effectue sa mise en place dans le mur. Cependant, la mise en place du châssis permet d'obtenir une dissymétrie du coffret permettant de libérer un espace en haut ou en bas de la cuve, en fonction du côté d'arrivée des câbles, pour dégager une zone réservée à l'arrivée des tubes ou au logement de borniers ou d'échelles à câbles etc...

On notera également que le montage de cet ensemble est facilité par le fait que les points de fixation se situent à l'avant du coffret, à l'extérieur (à gauche et à droite) de la face avant du coffret et hors zone de circulation de filerie. Il est possible entre autre de parfaire la mise à niveau, la face avant du coffret étant montée, en améliorant ainsi la précision dans le positionnement du châssis, sans gêner l'opération de câblage.

La réalisation précédemment décrite concerne un châssis constitué de deux châssis élémentaires et une réalisation avantageuse de la plaque de liaison est représentée en figure 8. La figure 7 illustre le montant d'un châssis constitué d'un seul châssis élémentaire. On notera que dans ce cas, l'unique lumière 31 sera réalisée de préférence directement dans la partie supérieure du montant sans interposition d'une plaque. Suivant cette réalisation, la lumière 31 comprend une portion de lumière circulaire 31a, à partir de laquelle s'étendent seulement deux portions droites 31b, 31c. Lorsque le châssis sera constitué par trois châssis élémentaires, la plaque 35, telle qu'illustrée en figure 9, comprendra deux lumières extérieures 12, 13, telles que celles utilisées pour un châssis comprenant deux châssis élémentaires, et deux lumières supplémentaires droites centrales 40, 41. Pour un châssis constitué de quatre châssis élémentaires, la plaque de liaison 36 telle qu'illustrée en figure 10 comprendra deux jeux de lumières supplémentaires 36a, 36b, les deux jeux comprenant chacun deux lumières rectilignes inclinées et parallèles entre elles 42, 43 et 44, 45, les lumières 42, 43 de l'un des jeux 36a formant un léger angle avec les portions inclinées 12d, 12e de la lumière 12, tandis que celles 44, 45 de l'autre jeu 36b forment un léger angle avec les portions inclinées 13d, 13e de la lumière 13. On notera en outre que l'angle d'inclinaison α entre la direction des portions extrêmes inclinées 12d, 12e, 13d, 13e des lumières 12, 13, et une droite D parallèle à la direction longitudinale des rails 6, 7 diminuera lorsque le nombre de rangées (ou de châssis élémentaires) constituant le châssis augmentera.

On a donc réalisé grâce à l'invention un châssis d'appareillage pour coffret électrique de conception simple et dont le montage est particulièrement facilité.

## Revendications

1. Châssis d'appareillage (C) destiné à être fixé dans un coffret électrique (E) ou analogue, du genre comprenant deux montants (3 à 6) reliés à leur partie inférieure par un rail de fixation (7,8) de l'appareillage électrique s'étendant sensiblement perpendiculairement auxdits montants, les deux montants étant fixés respectivement sur deux parois latérales opposées du coffret en étant logés respectivement dans deux évidements en vis à vis ménagés dans lesdites parois,
caractérisé en ce que les évidements précités (18a, 18b, 20a, 20b) présentent une largeur supérieure à celle des montants correspondants (3 à 6) et comportent des moyens de fixation (24 à 27 et 22 à 22c) coopérant avec des moyens de réglage (12 à 16) prévus dans la partie supérieure des montants (3 à 6) pour assurer la fixation du châssis (C) entre deux positions extrêmes définies par les parois latérales (c, d) des évidements, de manière à libérer un espace, d'un côté ou de l'autre du coffret, entre le rail et une paroi latérale du coffret parallèle au rail, en fonction du côté d'arrivée des câbles.

2. Châssis selon la revendication 1, caractérisé en ce que les moyens de réglage précités comportent au moins une lumière de forme allongée (12 à 16) ménagée dans la partie supérieure de chaque montant (3 à 6) coopérant avec une vis ou analogue (24 à 27) destinée à être vissée dans un orifice (22 à 22c) prévu dans la paroi latérale correspondante (18, 20) du coffret (E).

3. Châssis selon la revendication 2, caractérisé en ce que l'orifice précité est réalisé dans un élément (22 à 22c) de forme sensiblement cylindrique s'étendant en saillie sur la paroi de fond (e) de l'évidement correspondant (18a,18b,20a, 20b).

4. Châssis selon l'une quelconque des revendications 1 à 3, caractérisé en ce que les parois latérales (c, d) de chaque évidement (18a,18b,20a,20b) épousent la forme des parois latérales du montant correspondant (3 à 6).

5. Châssis selon l'une quelconque des revendications 2 à 4, caractérisé en ce que la lumière précitée (12 à 15) comprend une partie circulaire centrale (12a) à partir de laquelle s'étendent deux portions de lumières droites (12b, 12c) dont la largeur est inférieure au diamètre de la partie centrale (12a) et est légèrement supérieure au diamètre de la tige de la vis précitée (24 à 27), le diamètre de ladite partie centrale (12a) étant légèrement supérieur au diamètre de la tête de vis..

6. Châssis selon l'une quelconque des revendications 1 à 5, caractérisé en ce qu'il comporte au moins deux châssis élémentaires (1, 2) selon l'une quelconque des revendications précédentes, lesdits châssis (1, 2) étant reliés par deux plaques de liaison (9, 10) fixées sur la partie supérieure des montants (3 à 6) situés d'un même côté des rails, lesdites plaques (9, 10) comportant des lumières allongées (12 à 15) en regard de lumières allongées (16) prévues dans les parties supérieures des montants (3 à 6).

7. Châssis selon la revendication 6, caractérisé en ce que chaque plaque de liaison (9, 10) comprend deux lumières (12, 13 et 14, 15) selon la revendication 5, lesdites portions droites (12b, 12c, 13b, 13c) se terminant par des portions inclinées (12d, 12e et 13d, 13e) parallèles entre elles.

8. Châssis selon la revendication 7, caractérisé en ce que les parties externes (12d, 13e) des lumières précitées (12, 13) sont dirigées vers l'intérieur du coffret tandis que les parties internes (12e, 13d) sont dirigées vers l'extérieur dudit coffret (E).

9. Châssis selon l'une quelconque des revendications précédentes, caractérisé en ce que chaque montant (3 à 6) comporte une partie inférieure (3a à 6a) de fixation du rail (6, 7), une partie intermédiaire (3b à 6b) évasée et une partie supérieure (3c à 6c) comportant les moyens de réglage (12 à 16) précités et s'étendant sensiblement perpendiculairement à la partie intermédiaire précitée (3b à 6b).

10. Châssis selon l'une quelconque des revendications précédentes, caractérisé en ce que la partie inférieure (3a à 6a) de chaque montant (3 à 6) comporte au moins une glissière (a, b) dans laquelle l'extrémité correspondante du rail (6, 7) est montée coulissante et fixée par des moyens de fixation appropriés.

11. Châssis selon l'une quelconque des revendications précédentes, caractérisé en ce que le coffret est fermé par un plastron et en ce que les moyens de fixation précités sont situés à l'avant du coffret et de part et d'autre du plastron.

## Patentansprüche

1. Schaltgeräteträger (C) zur Befestigung in einem Elektroinstallationskasten (E) o.ä., der bauarttypisch zwei Stützer (3 bis 6) umfaßt, die in ihrem unteren Abschnitt über eine annähernd senkrecht zu den genannten Stützern angeordnete Tragschiene (7, 8) zur Befestigung der elektrischen Schaltgeräte miteinander verbunden sind, wobei die beiden Stützer an zwei einander gegenüberliegenden Seitenwänden des Installationskastens befestigt und dabei in zwei einander gegenüberliegende, in den genannten Wänden ausgebildete Ausnehmungen eingesetzt sind,
dadurch gekennzeichnet ist, daß die genannten Ausnehmungen (18a, 18b, 20a, 20b) eine größere Breite aufweisen als die zugehörigen Stützer (3 bis 6) sowie Befestigungsmittel (24 bis 27 und 22 bis 22c) umfassen, die mit im oberen Abschnitt der Stützer (3 bis 6) ausgebildeten Einstellmitteln (12 bis 16) zusammenwirken, um die Befestigung des Trägers (C) zwischen zwei, durch die Seitenwände (c, d) der Ausnehmungen definierten Endstellungen zu gewährleisten, derart daß, je nach Seite der Kabelzuführung auf der einen oder der anderen Seite des Installationskastens zwischen der Tragschiene und einer, parallel zur Tragschiene verlaufenden Seitenwand des Installationskastens ein Freiraum ausgebildet wird.

2. Träger nach Anspruch 1, dadurch gekennzeichnet, daß die genannten Einstellmittel mindestens eine, im oberen Abschnitt jedes Stützers (3 bis 6) ausgebildete längliche Aussparung (12 bis 16) umfassen, die mit einer Schraube o.ä. (24 bis 27) zusammenwirkt, welche dazu dient, in eine in der entsprechenden Seitenwand (18, 20) des Installationskastens (E) ausgebildete Bohrung (22 bis 22c) eingedreht zu werden.

3. Träger nach Anspruch 2, dadurch gekennzeichnet, daß die genannte Bohrung in einem annähernd zylindrisch geformten Element (22 bis 22c) ausgebildet ist, das aus der Bodenwand (e) der zugehörigen Ausnehmung (18a, 18b, 20a, 20b) hervorsteht.

4. Träger nach irgendeinem der Ansprüche 1 bis 3, dadurch gekennzeichnet, daß sich die Seitenwände (c, d) jeder Ausnehmung (18a, 18b, 20a, 20b) an die Form der Seitenwände des zugehörigen Stützers (3 bis 6) anschmiegen.

5. Träger nach irgendeinem der Ansprüche 2 bis 4, dadurch gekennzeichnet, daß die genannte Aussparung (12 bis 15) einen kreisrunden Mittelabschnitt (12a) umfaßt, an den sich zwei geradlinige Aussparungsabschnitte (12b, 12c) anschließen, deren Breite kleiner als der Durchmesser des kreisrunden Abschnitts (12a) und geringfügig größer als der Durchmesser des Schafts der genannten Schraube (24 bis 27) ist, wobei der Durchmesser des genannten Mittelabschnitts (12a) geringfügig größer ist als der Durchmesser des Schraubenkopfes.

6. Träger nach irgendeinem der Ansprüche 1 bis 5, dadurch gekennzeichnet, daß er mindestens zwei verwendete Trägereinheiten (1, 2) nach irgendeinem der vorhergehenden Ansprüche umfaßt, wobei die genannten Trägereinheiten (1, 2) über zwei Verbindungsplatten (9, 10) miteinander verbunden sind, die jeweils am oberen Abschnitt der auf der gleichen Seite der Tragschienen angeordneten Stützer (3 bis 6) befestigt sind, wobei die genannten Platten (9, 10) den, in den oberen Abschnitten der Stützer (3 bis 6) ausgebildeten Aussparungen (16) gegenüberliegende längliche Aussparungen (12 bis 15) aufweisen.

7. Träger nach Anspruch 6, dadurch gekennzeichnet, daß jede Verbindungsplatte (9, 10) zwei Aussparungen (12, 13 und 14, 15) gemäß Anspruch 5 umfaßt, wobei die genannten geradlinigen Abschnitte (12b, 12c, 13b, 13c) in zwei parallel zueinander verlaufende geneigte Abschnitte (12d, 12e und 13d, 13e) münden.

8. Träger nach Anspruch 7, dadurch gekennzeichnet, daß die außenliegenden Endabschnitte (12d, 13e) der genannten Aussparungen (12, 13) zur Innenseite des Installationskastens gerichtet sind, während ihre innenliegenden Endabschnitte (12e, 13d) zur Außenseite des genannten Installationskastens (E) gerichtet sind.

9. Träger nach irgendeinem der vorhergehenden Ansprüche, dadurch gekennzeichnet, daß jeder Stützer (3 bis 6) einen unteren Abschnitt (3a bis 6a) zur Befestigung der Tragschiene (6, 7), einen konischen Mittelabschnitt (3b bis 6b) und einen oberen Abschnitt (3c bis 6c) aufweist, welcher die genannten Einstellmittel (12 bis 16) umfaßt und annähernd senkrecht zum genannten Mittelabschnitt (3b bis 6b) verläuft.

10. Träger nach irgendeinem der vorhergehenden Ansprüche, dadurch gekennzeichnet, daß der untere Abschnitt (3a bis 6a) jedes Stützers (3 bis 6) mindestens eine Führung (a, b) umfaßt, in der das entsprechenden Ende der Tragschiene (6, 7) gleitend gelagert und mit Hilfe geeigneter Befestigungsmittel befestigt ist.

11. Träger nach irgendeinem der vorhergehenden Ansprüche, dadurch gekennzeichnet, daß der Installationskasten mit einer Frontplatte verschlossen ist und die genannten Befestigungsmittel an der Vorderseite des Installationskastens auf beiden Seiten der Frontplatte angeordnet sind.

## Claims

1. A switchgear support frame (C) designed to be fixed in an electrical enclosure (E) or similar, of the kind comprising two uprights (3 to 6) joined at their lower part by a fixing rail (7, 8) of the electrical switchgear apparatuses extending appreciably perpendicularly to said uprights, the two uprights being fixed respectively onto two opposite side Walls of the enclosure and being housed respectively in two recesses arranged facing one another in said walls,
characterized in that the above-mentioned recesses (18a, 18b, 20a, 20b) present a width larger than that of the corresponding uprights (3 to 6) and comprise fixing means (24 to 27 and 22 to 22c) operating in conjunction with adjustment means (12 to 16) provided in the upper part of the uprights (3 to 6) to perform fixing of the frame (C) between two extreme positions defined by the side walls (c, d) of the recesses so as to free a space on one side of the enclosure or the other between the rail and a side wall of the enclosure parallel to the rail, depending on which side the cables are input

2. The frame according to claim 1, characterized in that the above-mentioned adjustment means comprise at least one aperture of elongate shape (12 to 16) arranged in the upper part of each upright (3 to 6) operating in conjunction with a screw or similar (24 to 27) designed to be screwed into an orifice (22 to 22c) provided in the corresponding side wall (18, 20) of the enclosure (E).

3. The frame according to claim 2, characterized in that the above-mentioned orifice is made in an element (22 to 22c) of appreciably cylindrical shape extending in protrusion from the back wall (e) of the corresponding recess (18a, 18b, 20a, 20b).

4. The frame according to any one of the claims 1 to 3, characterized in that the side walls (c, d) of each recess (18a, 18b, 20a, 20b) exactly follow the shape of the side walls of the corresponding upright (3 to 6).

5. The frame according to any one of the claims 2 to 4, characterized in that the above-mentioned aperture (12 to 15) comprises a circular central part (12a) from which two portions of straight apertures (12b, 12c) extend whose width is smaller than the diameter of the central part (12a) and is slightly larger than the diameter of the body of the above-mentioned screw (24 to 27), the diameter of said central part (12a) being slightly larger than the diameter of the head of the screw.

6. The frame according to any one of the claims 1 to 5, characterized in that it comprises at least two elementary frames (1, 2) according to any one of the foregoing claims, said frames (1, 2) being joined by two connecting plates (9, 10) fixed onto the upper part of the uprights (3 to 6) situated on one side of the rails, said plates (9, 10) comprising elongate apertures (12 to 15) facing elongate apertures (16) provided in the upper parts of the uprights (3 to 6).

7. The frame according to claim 6, characterized in that each connecting plate (9, 10) comprises two apertures (12, 13 and 14, 15) according to claim 5, said straight portions (12b, 12c, 13b, 13c) being terminated by inclined portions (12d, 12e and 13d, 13e) parallel to one another.

8. The frame according to claim 7, characterized in that the external parts (12d, 13e) of the above-mentioned apertures (12, 13) are directed towards the inside of the enclosure whereas the internal parts (12e, 13d) are directed towards the outside of said enclosure (E).

9. The frame according to any one of the foregoing claims, characterized in that each upright (3 to 6) comprises a lower part (3a to 6a) for fixing of the rail (6, 7), a flared intermediate part (3b to 6b) and an upper part (3c to 6c) comprising the above-mentioned adjustment means (12 to 16) and extending appreciably perpendicularly to the above-mentioned intermediate part (3b to 6b).

10. The frame according to any one of the foregoing claims, characterized in that the lower part (3a to 6a) of each upright (3 to 6) comprises at least one slide (a, b) in which the corresponding end of the rail (6, 7) is mounted sliding and fixed by suitable fixing means.

11. The frame according to any one of the foregoing claims, characterized in that the enclosure is closed by a front plate and that the above-mentioned fixing means are situated at the front of the enclosure on each side of the front plate.
